Europäisches Patentamt

European Patent Office

Office européen des brevets

(19)

(11) Numéro de publication: **0 182 703**
A1

(12) # DEMANDE DE BREVET EUROPEEN

(21) Numéro de dépôt: **85402169.8**

(22) Date de dépôt: **08.11.85**

(51) Int. Cl.⁴: **F 16 C 32/06**

(30) Priorité: **13.11.84 FR 8417291**

(43) Date de publication de la demande: **28.05.86**
**Bulletin 86/22**

(84) Etats contractants désignés: **DE GB**

(71) Demandeur: **THOMSON-CSF, 173, Boulevard**
**Haussmann, F-75379 Paris Cedex 08 (FR)**

(72) Inventeur: **Estang, Bernard, THOMSON-CSF**
**SCPI 173, bld Haussmann, F-75379 Paris Cedex 08 (FR)**
Inventeur: **Lacombe, Jean-Claude, THOMSON-CSF**
**SCPI 173, bld Haussmann, F-75379 Paris Cedex 08 (FR)**

(74) Mandataire: **Benoit, Monique et al, THOMSON-CSF**
**SCPI 19, avenue de Messine, F-75008 Paris (FR)**

(54) **Palier aérostatique à sustentation multidirectionnelle de grand diamètre, et système d'antenne radar comportant un tel palier.**

(57) L'invention se rapporte principalement aux paliers aérostatiques à sustentation multidirectionnelle de grands diamètres et aux systèmes d'antenne radar comportant un tel palier.

L'invention consiste principalement en un palier de grand diamètre permettant la rotation à grande vitesse d'un rotor (8) par rapport à un stator (7), et ceci sans contact mécanique entre lesdits rotors et lesdits stators. Le rotor (8) est guidé aussi bien axialement que radialement par un mince film d'air comprimé s'écoulant entre le rotor (8) et le stator (7). Le rotor (8) a par exemple une forme bitronconique; la forme du stator (7) est complémentaire de celle du rotor (8).

L'invention s'applique notamment à la mise en rotation à grande vitesse de lentille optique de grand diamètre par exemple pour le balayage radar.

EP 0 182 703 A1

## PALIER AEROSTATIQUE A SUSTENTATION MULTIDIRECTIONNELLE DE GRAND DIAMETRE ET SYSTEME D'ANTENNE RADAR COMPORTANT UN TEL PALIER

La présente invention concerne principalement un palier aérostatique à sustentation multidirectionnelle de grand diamètre et les systèmes d'antenne radar comportant un tel palier .

Le dispositif selon l'invention est destiné à entraîner en rotation rapide des dispositifs comme par exemple une lentille optique et/ou radioélectrique de grand diamètre. Dans un exemple de réalisation on veut entraîner en rotation deux lentilles de 320 mm de diamètre, l'une à une vitesse de plus 3000 tours par minute et l'autre une vitesse de moins 3000 tours par minute en supposant qu'aucune ombre ne cache le faisceau de chaque lentille tout en assurant leur positionnement quelle que soit leur orientation.

D'une part il est connu de réaliser des guidages circulaires de grand diamètre en utilisant trois galets placés à 120° sur la circonférence du dispositif à entraîner. Pour une vitesse de rotation de 3000 tr/mn du dispositif à entraîner, la vitesse de rotation des roulements desdits galets sera de l'ordre de 50000 tr/mn. Cette vitesse de rotation demande un choix de composants spéciaux. De plus, le contact des pièces métalliques ayant des vitesses de rotation différentes au niveau du système d'entraînement du palier ainsi qu'au niveau des roulements rend le système bruyant et provoque des vibrations. Toute erreur de positionnement des galets provoque un glissement des points de contact de ceux-ci avec le dispositif à entraîner créant des forces de frottement très importantes, exigeant ainsi des puissances d'entraînement élevées. Le dispositif selon l'invention en utilisant des coussins d'air permet d'éviter tout contact mécanique entre les parties en rotation et les parties fixes. En effet le dispositif selon l'invention utilise des "coussins d'air" pour assurer la sustentation des dispositifs que l'on veut maintenir en rotation aussi bien axialement que radialement.

L'invention sera mieux comprise au moyen de la description ci-après des figures annexées données comme des exemples non limitatifs parmi lesquels :

- la figure 1 est une vue en coupe d'un exemple de réalisation du dispositif selon l'invention ;

- la figure 2 est une vue en coupe de face du dispositif selon l'invention ;

- la figure 3 comporte une vue de face et de profil des alvéoles mis en oeuvre pour la réalisation du dispositif selon l'invention ;

- la figure 4 est une vue en coupe d'un second exemple de réalisation du dispositif selon l'invention.

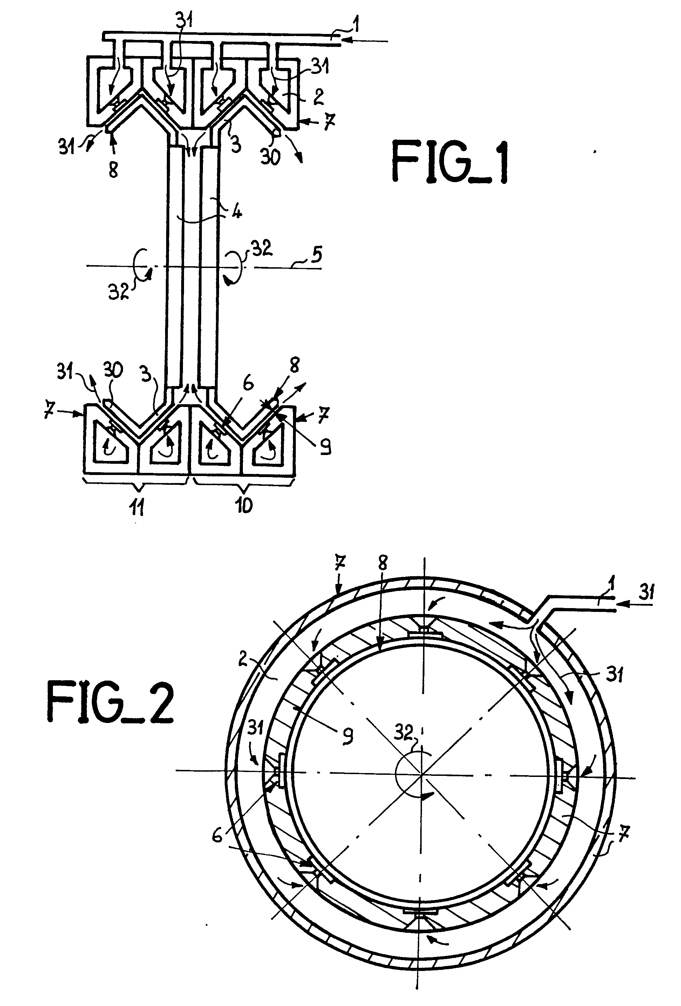

Sur les figures 1 à 4 on a utilisé les mêmes références pour désigner les mêmes éléments.

Sur la figure 1, on peut voir un exemple de réalisation du dispositif selon l'invention comportant deux rotors 8 et deux stators 7. Il est bien entendu, que l'invention n'est pas limitée aux dispositifs comportant deux rotors. Le principe de la présente invention s'applique aussi bien à un rotor unique, qu'au contraire à des rotors multiples. La forme des rotors 8 et des stators 7 est adaptée l'une à l'autre de façon à ménager un très faible jeu 9, par exemple compris entre 60 et 70 µm. Les stators 7 comportent sur leur périphérie des chambres d'écoulement connectées à des alvéoles permettant l'écoulement de l'air comprimé. Les chambres d'écoulement 2 sont alimentées en air comprimé par un dispositif d'alimentation 1. L'alvéole 6 permet d'injecter de l'air sous pression entre le rotor 8 et le stator 7 dans le jeu 9. A la détente l'air sous pression est laminé une première fois par les chambres d'écoulement 2 et une seconde fois par les alvéoles 6. Dans l'exemple de réalisation du dispositif selon l'invention illustré sur la figure 1 le stator 7 comporte deux ensembles d'alvéoles 6 placés sur deux couronnes tronconiques. Le rotor 8 adapté à ce stator a donc une forme doublement tronconique. Les rotors 8 de l'exemple de réalisation illustré sur la figure 1 comportent à leurs périphéries des parois 3 et 30 tronconiques, présentant par exemple un angle droit entre elles. Le centre du rotor soutient le dispositif 4 que l'on veut mettre en rotation. Le dispositif 4 est par exemple une lentille optique, ou une lentille diélectrique pour onde hyperfréquence, un miroir, un masque assurant la modulation d'onde.

Le dispositif de la figure 1 permet un positionnement aussi bien radial que axial du rotor par rapport au stator et ceci sans contact mécanique entre les deux.

Sur les figures 1 et 2 les flèches 31 représentent l'écoulement d'air tandis que les flèches 32 représentent le sens de rotation du palier selon l'invention.

Sur la figure 2, on peut voir une vue de face du dispositif selon l'invention. Sur la vue de face on a représenté un jeu d'alvéoles 6 permettant la sustantation du rotor 8 par rapport au stator 7. Un second jeu d'alvéoles 6 est placé derrière les alvéoles visibles sur la figure 2. Dans l'exemple de réalisation du dispositif selon l'invention chacun des deux jeux d'alvéoles 6 en comporte huit répartis sur la périphérie du stator 7. L'absence de contact entre le rotor 8 et le stator 7 permet de réduire la puissance des dispositifs d'entraînement par exemple électrique dudit rotor. Ces dispositifs ne sont pas représentés sur les figures. De plus, l'absence de contact permet d'éviter quasiment toute usure du dispositif et le dispositif selon l'invention utilisant la sustentation aérostatique, la rotation du rotor s'effectue automatiquement autour de son axe principal d'inertie.

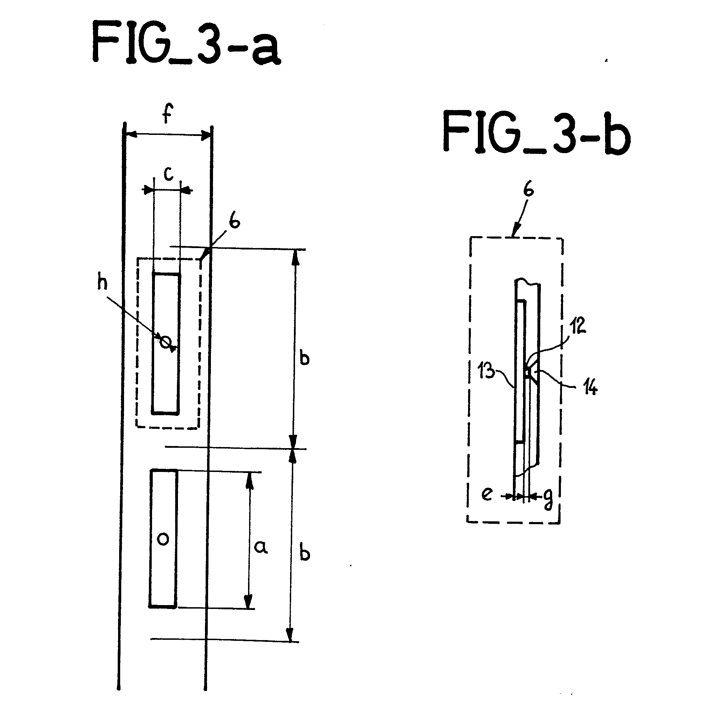

Sur la figure 3, on peut voir un exemple de réalisation des alvéoles permettant de créer un film mince d'air sous pression entre le rotor 8 et le stator 7. La figure 3a est une vue de face des alvéoles 6 tandis que la figure 3b illustre une alvéole 6 en coupe.

Dans un exemple de réalisation du dispositif selon l'invention, la distance b entre deux alvéoles successifs est égale à 46 mm, la longueur a de la partie 13 de l'alvéole 6 dirigée vers le rotor 8 est égale à 32 mm, le diamètre h des injecteurs qualibrés 12 est égal à

4

1 mm, l'épaisseur e des parties 13 des alvéoles est égale à 2 mm, l'épaisseur g des injecteurs qualibrés est égale à 1 mm, la largeur c des parties 13 des alvéoles est égale à 6 mm, la largeur totale de la partie du stator soutenant les alvéoles 6 est égale à 20 mm.

Chaque alvéole 6 comporte en allant de la chambre de détente 2 vers le rotor successivement un cône 14, un injecteur de diamètre qualibré 12 ainsi qu'une ouverture 13.

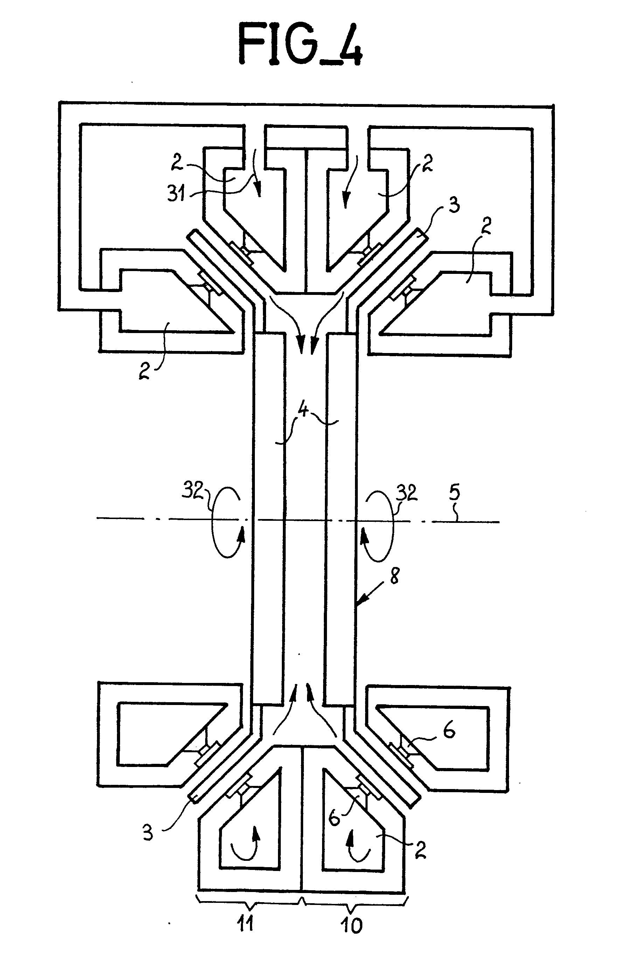

Sur la figure 4, on peut voir un second exemple de réalisation du dispositif selon l'invention. Les rotors 8 de l'exemple de réalisation illustré sur la figure 4, comportent à leurs périphéries des parois 3 tronconiques. Dans cet exemple de réalisation du dispositif selon l'invention les deux jeux de chambres d'écoulement 2 sont disposés sur les deux faces des parois 3 assurant la sustentation aérostatique, du rotor 8 par rapport au stator 7, radialement et axialement.

Dans un exemple de réalisation du dispositif selon l'invention la pression de l'air comprimé arrivant en 1 est égale à 1 bar sous un débit de 15 $dm^3$ par seconde. On utilise des patins de dimension de 20 mm x 46 mm, donnant un coefficient de surface de 0,51. La pression dans les alvéoles 6 est égale à 0,3 bar donnant des efforts admissibles sur le palier de 5 daN.

La pression $P_0$ dans l'alvéole 6 est donnée par la formule :

$$P_0 = P_a + \frac{W}{kW \cdot M_{in}(S_{pr}, S_{pa})}$$

où $P_a$ est égale à la pression atmosphérique, W est égale à la charge du palier, kW est de coefficient de surface effective de chaque face de paroie 3 et 30 et Min $(S_{pr}, S_{pa})$ est le minimum de la surface projetée radialement $S_{pr}$, et de la surface projetée axialement $S_{pa}$ est égale au diamètre multiplié par la largeur multipliée par cos 45°.

$S_{pa} = (D^2 - d^2) \frac{\pi}{4}$. D est le diamètre du rotor 8 et d est le diamètre intérieur de la partie tronconique (3 et 30) dudit rotor 8.

5

Le débit massique $Q_0$ de l'air donné par la formule :

$$Q_0 = \frac{\pi h^3 (P^2_0 - P^2_a)}{12 \, \mu RT \, \ln(B)}$$

où h est la valeur du jeu 9, $\mu$ est la viscosité de l'air, R est la constante de l'air (288 $JK^{-1} \, kg^{-1}$), T est la température de l'air et B est une constante dont la valeur dépend de la forme des alvéoles 6. La section A de l'orifice des alvéoles 6 est donnée par la formule :

$$\frac{1}{A} = \frac{C \cdot P_i}{Q_0} \sqrt{\frac{2k}{(k-1)RT} \left[ \left(\frac{P_0}{P_i}\right) 2/k - \left(\frac{P_0}{P_i}\right) \frac{K-1}{k} \right]}$$

où, $P_i$ est la pression dans les chambres 2, C est le coefficient de concentration de l'orifice, k est le rapport de la capacité thermique et de la capacité massique de l'air.

L'invention s'applique notamment aux antennes radar, particulièrement aux radars aéroportés.

0182703

# REVENDICATIONS

1. Palier comportant un stator et un rotor en sustentation aérostatique radialement et axialement, caractérisé par le fait que le rotor est une couronne bi-tronconique.

2. Palier selon la revendication 1, caractérisé par le fait que deux jeux d'alvéoles (6) assurant la sustentation du rotor (8) par rapport au stator (7) sont placés des deux côtés de la paroi (3) du rotor.

3. Palier selon la revendication 1 ou 2, caractérisé par le fait que la sustentation du rotor est assurée par des alvéoles injectant de l'air sous pression, lesdits alvéoles étant situés à la périphérie du stator.

4. Palier selon la revendication 3, caractérisé par le fait que les alvéoles comportent des injecteurs.

5. Palier selon l'une quelconque des revendications 1 à 4, caractérisé par le fait que le stator comporte des chambres d'écoulement d'air.

6. Palier selon l'une quelconque des revendications 1 à 5, caractérisé par le fait que ledit palier comporte plusieurs rotors susceptibles de tourner à des vitesses de rotation différente.

7. Palier selon la revendication 6, caractérisé par le fait qu'il comporte deux rotors susceptibles de tourner en sens inverse.

8. Palier selon l'une quelconque des revendications 1 à 7, caractérisé par le fait que le rotor supporte une lentille.

9. Palier selon l'une quelconque des revendications précé-

0182703

dentes, caractérisé par le fait que le diamètre dudit palier est supérieur à 250 mm.

10. Système d'antenne radar, caractérisé par le fait qu'il comporte un palier selon l'une quelconque des revendications précédentes.

11. Système d'antenne radar selon la revendication 10, caractérisé par le fait que ledit système d'antenne radar est un système radar aéroporté.

FIG_1

FIG_2

# FIG_3-a

# FIG_3-b

0182703

# FIG_4

Office européen
des brevets

**RAPPORT DE RECHERCHE EUROPEENNE**

C182703
Numero de la demande

EP  85 40 2169

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-1 283 944  (G. GOBERT) <br> * En entier * | 1,3,5 | F 16 C   32/06 |
| A | FR-A-1 548 785  (M.L. GREENBERG et al.) <br> * Page 3, colonne 2 - page 4, colonne 1; figure 4 * | 1,3,4, ·6 | |
| A | US-A-4 330 159  (M. KAKIMOTO) <br> * En entier * | 1-5 | |
| A | EP-A-0 030 877  (J.P. MARTIN et al.) <br> * Page 7, lignes 10-25 * | | |
| A | US-A-3 226 721  (R.V. GOULD) | | |

---

DOMAINES TECHNIQUES RECHERCHES (Int. Cl.4)

F 16 C
H 01 Q
G 02 B

Le présent rapport de recherche a été établi pour toutes les revendications

| Lieu de la recherche <br> LA HAYE | Date d'achèvement de la recherche <br> 14-02-1986 | Examinateur <br> BEGUIN C.P. |
|---|---|---|